# EUROPÄISCHE PATENTSCHRIFT

(11) **EP 1 391 541 B1**
(45) Veröffentlichungstag und Bekanntmachung des Hinweises auf die Patenterteilung: **25.01.2006**
(21) Anmeldenummer: 03017212.6
(22) Anmeldetag: 29.07.2003
(51) Int. Cl.: C25F 3/14, C25F 3/30

(54) **Verfahren zur Bildung einer Ausnehmung in der Oberfläche eines Werkstücks, insbesondere zur Herstellung von Mikroformen**
Process for providing recesses in the surface of a workpiece, in particular for making micromolds
Procédé pour créer des évidements à la surface d' une pièce, en particulier pour la production de micromoules

(30) Priorität: 30.07.2002 DE 10234547
(43) Veröffentlichungstag der Anmeldung: 25.02.2004
(73) Patentinhaber: Fachhochschule Furtwangen, 78120 Furtwangen (DE)
(72) Erfinder: Mescheder, Ulrich, Prof. Dr., 78120 Furtwangen (DE); Kovacs, Andreas, Dr., 78120 Furtwangen (DE)
(74) Vertreter: Gagel, Roland

(56) Entgegenhaltungen:
- EP-A- 1 088 785
- WO-A-91/07226
- DE-A- 10 030 352
- DE-A- 10 046 621
- US-A- 3 560 357

## Beschreibung

### Technisches Anwendungsgebiet

Die vorliegende Erfindung betrifft ein Verfahren zur Bildung einer Ausnehmung in der Oberfläche eines Werkstücks, insbesondere zur Herstellung von Mikroformen, bei dem die Ausnehmung durch elektrochemischen Materialabtrag unter Einsatz einer strukturierten Maskierungsschicht erzeugt wird, die auf die Oberfläche aufgebracht wird.

Ein wichtiges Anwendungsgebiet des vorliegenden Verfahrens ist die Herstellung von Formen, beispielsweise für die Kunststoff-Abformtechnik. Bei der Kunststoff-Abformtechnik wird durch Spritzgießen, Prägen oder andere Abformtechniken die Oberflächenstruktur einer Form auf einen Kunststoffkörper oder eine Kunststofffolie übertragen. Für eine Mikrostrukturierung müssen dabei Mikroformen mit hoher Genauigkeit hergestellt werden.

### Stand der Technik

Zur Herstellung von Formen, die durch ein oder mehrere Ausnehmungen in einem Formkörper gebildet sind, lassen sich unterschiedliche Techniken einsetzen. So sind Formgebungsverfahren der Feinwerktechnik, wie Funkenerodieren, Drahterodieren, Senkerodieren, Fräsen, Drehen, Bohren und Schleifen, für die Erzeugung größerer Strukturen bekannt. Zur Erzeugung kleinerer Strukturen werden Strukturierungsverfahren der Mikrotechnik eingesetzt, bei denen die formgebende Ausnehmung aus dem Formkörper herausgeätzt wird. Die hierbei eingesetzten Ätzverfahren zeichnen sich durch die Anisotropie A_{f}, d.h. die Richtungsabhängigkeit beispielsweise der Ätzrate, aus. Nasschemische Ätzverfahren sind isotrop (A_{f} = 0), während trockenchemische Ätzverfahren anisotrop sind (A_{f} ≤ 1). Durch geeignete Wahl der Prozessparameter können auch Zwischenwerte der Anisotropie eingestellt werden.

Ein bekanntes Verfahren der Mikrotechnik nutzt die Wirkung des elektrochemischen Materialabtrags zur Erzeugung von Strukturen in einer Werkstückoberfläche. So ist beispielsweise aus der DE 696 02 056 T2 ein derartiges Verfahren zur Bildung einer Ausnehmung in der Oberfläche eines Werkstücks bekannt, bei dem die Ausnehmung durch elektrochemischen Materialabtrag in einem Anodisierungsprozess erzeugt wird. Bei diesem Anodisierungsprozess bildet sich in der Ausnehmung poröses Silizium, das anschließend entfernt wird. Zur Festlegung der lateralen Dimension der Ausnehmung wird eine strukturierte Maskierungsschicht eingesetzt, die im Bereich der zu erzeugenden Ausnehmung eine großflächige Durchgangsöffnung aufweist.

Dieses sowie die anderen genannten Verfahren des Standes der Technik haben jedoch den Nachteil, dass sie eine freie dreidimensionale Gestaltung der Oberfläche des Werkstücks nicht auf einfache Weise ermöglichen. Insbesondere ist die Erzeugung eines beliebig geformten Tiefenprofils der Ausnehmung mit diesen Verfahren nicht oder nur mit großem Aufwand möglich. Bei den genannten Ätzverfahren müssten hierzu nacheinander mehrere Ätzvorgänge mit unterschiedlichen Maskierungsschichten durchgeführt werden.

Der Anmelderin ist weiterhin ein Verfahren zur Bildung einer Ausnehmung in der Oberfläche eines Werkstücks bekannt, bei dem eine gestufte Oberfläche in einer Lackstruktur durch eine so genannte Grauwertmaske und Mehrfachbelichtung hergestellt wird. Die Lackstruktur kann dann durch ein Ätzverfahren in eine für die Abformung geeignete Oberfläche eines Werkstücks übertragen werden. Die Genauigkeit dieses Verfahrens ist jedoch durch die endliche Anzahl von Grauwerten bzw. durch die Genauigkeit der Dosiseinstellung limitiert.

Die EP-A-1088785 beschreibt ein Verfahren zur Herstellung einer frei hängenden Mikrostruktur, bei dem durch Aufbringen einer Maske mit mehreren Durchgangsöffnungen in Verbindung mit einem anschließenden zweistufigen elektrochemischen Prozess eine Mikrostruktur erzeugt und freigelegt wird, die über einer durch den elektrochemischen Prozess erzeugten Ausnehmung hängt. Hierzu wird in einer ersten Stufe in einem durch eine Maske definierten Bereich poröses Material erzeugt. Anschließend wird in der zweiten Stufe ein oberer Bereich des porösen Materials durch elektrochemisches Polieren vom Substrat abgetrennt. Dieser oberere Bereich bildet die frei hängende Mirkostruktur in der durch das Herauslösen gebildeten Ausnehmung. In einem Ausfürungsbeispiel der Druckschrift stellt sich in einem durch mehrere Durchgangsöffnungen perforierten Bereich der Maske eine geringere Stromdichte ein als in dem eine große Durchgangsöffnung bildenden Bereich. Diese unterschiedliche Stromdichte wird bei dem Verfahren ausgenutzt, um den elektrochemischen Polierprozess bei Anlegen einer bestimmten Spannung lediglich im Bereich der großen Durchgangsöffnung und nicht unter dem perforierten Bereich durchzuführen.

Bei dem Verfahren der US-A-3560357 wird zum elektrochemischen Ätzen einer leitfähigen Schicht auf einem isolierenden Substrat auf die Rückseite des Substrats eine elektrisch leitfähige Schicht aufgebracht, um das Anlegen einer elektrischen Spannungsdifferenz zwischen dem Elektrolyten und der zu ätzenden Schicht auf dem Substrat zu ermöglichen.

Die WO 91/07226 A zeigt ein Verfahren zur Herstellung von Mikroformen für Mikropartikel, bei dem die Technik des elektrochemischen Materialabtrags zur Herstellung der Mikroformen eingesetzt wird.

Ausgehend von diesem Stand der Technik besteht die Aufgabe der vorliegenden Erfindung darin, ein Verfahren zur Bildung einer Ausnehmung in der Oberfläche eines Werkstücks, insbesondere zur Herstellung von Mikroformen, anzugeben, mit dem eine nahezu freie dreidimensionale Gestaltung der Ausnehmung auf einfache Weise möglich ist.

### Darstellung der Erfindung

Die Aufgabe wird mit dem Verfahren gemäß Patentanspruch 1 gelöst. Vorteilhafte Ausgestaltungen des Verfahrens sind Gegenstand der Unteransprüche oder lassen sich aus der nachfolgenden Beschreibung sowie dem Ausführungsbeispiel entnehmen.

Bei dem vorliegenden Verfahren wird die Technik des elektrochemischen Materialabtrags unter Einsatz einer strukturierten Maskierungsschicht auf der Oberfläche des Werkstücks zur Erzeugung der Ausnehmung eingesetzt. Das Verfahren zeichnet sich dadurch aus, dass die Stromdichte beim elektrochemischen Materialabtrag durch geeignete Verteilung von Durchgangsöffnungen in der Maskierungsschicht über der Ausnehmung derart lokal beeinflusst wird, dass ein frei vorgebbares Tiefenprofil der Ausnehmung entsteht.Auf der der Oberfläche mit der Maskierungsschicht gegenüber liegenden rückseitigen Oberfläche des Werkstücks wird eine elektrisch leitfähige Schicht aufgebracht oder in der rückseitigen Oberfläche erzeugt, die die Anode beim elektrochemischen Materialabtrag bildet. Diese Schicht wird flächig strukturiert, um das Tiefenprofil der Ausnehmung zusätzlich zu beeinflussen.

Bei dem vorliegenden Verfahren wird ausgenutzt, dass die Ätzrate bei dem stromabhängigen Prozess des elektrochemischen Materialabtrags von der Stromdichte abhängig ist. Durch eine lokale Beeinflussung dieser Stromdichte durch die Verteilung, insbesondere durch geeignete Wahl der Anzahl, der Öffnungsdurchmesser sowie der lokalen Dichte, der Durchgangsöffnungen in der Maskierungsschicht lässt sich somit ein Stromdichteprofil im Bereich der zu bildenden Ausnehmung erzeugen, das zu einem beliebig vorgebbaren Tiefenprofil der Ausnehmung führt und somit in einem einzigen Herstellungsschritt eine freie dreidimensionale Gestaltung der Oberfläche ermöglicht. Im Gegensatz zu bekannten Verfahren des elektrochemischen Materialabtrags unter Einsatz einer Maskierungsschicht, bei dem eine einzelne, die lateralen Dimensionen der Ausnehmung vorgebende Durchgangsöffnung in die Maskierungsschicht eingebracht wird, weist die Maskierungsschicht beim vorliegenden Verfahren im gleichen Bereich keine großflächige Durchgangsöffnung sondern eine Vielzahl von kleineren Durchgangsöffnungen auf, die entsprechend dem gewünschten Tiefenprofil über diese Fläche verteilt sind. Die dreidimensionale Form der Ausnehmung entsteht dabei durch die geeignet zweidimensional strukturierte Maskierungsschicht, durch die die Stromdichte im Bereich der zu erzeugenden Ausnehmung lokal beeinflusst wird. Die Maskierungsschicht besteht aus einem geeigneten Material, das chemisch resistent in der für den elektrochemischen Prozess eingesetzten Elektrolytlösung sein muss.

In einer bevorzugten Ausführungsform wird ein elektrisch isolierendes Material für die Maskierungsschicht eingesetzt. Grundsätzlich muss die Maskierungsschicht allerdings nicht unbedingt isolierend sein, so dass auch Metalle wie Au und Pt dafür in Frage kommen, die beispielsweise durch Sputtern aufgebracht werden können. Auch mit einer derartigen elektrisch leitfähigen Maskierungsschicht kann die Stromdichte lokal verändert werden, wobei damit möglicherweise die Variation der Stromdichte schlechter einstellbar ist als mit einer elektrisch isolierenden Maskierungsschicht.

Die für das Verfahren geeigneten Werkstücke müssen einen Stromfluss mit für den elektrochemischen Prozess erforderlichen Stromdichten zulassen, die in der Regel zwischen 10 und 250 mA/cm² liegen. Geeignet sind prinzipiell alle elektrisch leitfähigen sowie geeignet dotierten halbleitenden Materialien. Besonders vorteilhaft ist der Einsatz von einkristallinem Silizium als Werkstückmaterial. Der elektrochemische Abtragungsprozess bei einkristallinem Silizium, beispielsweise in einer HF/Ethanol-Lösung, ist unter dem Begriff Anodisieren von Silizium bekannt. Bei diesem Anodisierungsprozess entsteht zunächst poröses Silizium, das anschließend auf einfache Weise aus der Ausnehmung entfernt werden kann.

Mit dem vorliegenden Verfahren sind durch geeignete Strukturierung der Maskierungsschicht, d.h. durch eine geeignete Wahl der Verteilung der Durchgangsöffnungen, insbesondere der Anzahl, der Öffnungsdurchmesser sowie der lokalen Dichte der Durchgangsöffnungen, dreidimensionale Formen mit nahezu frei wählbarer Gestalt der Oberfläche herstellbar. Das Verfahren ermöglicht zudem die Herstellung von Strukturen bis in den Sub-Mikrometerbereich hinein. Die dreidimensionalen Formen lassen sich beim vorliegenden Verfahren mit nur einem Herstellungsschritt, bestehend aus Maskierung mit nachfolgendem Ätzvorgang, erzeugen, wogegen bei bekannten Verfahren des Standes der Technik zur Erzeugung von Formen mit einem weitaus grober strukturierten Tiefenprofil mehrere Maskierungs- und Ätzschritte erforderlich sind. In einer besonders vorteilhaften Ausgestaltung des vorliegenden Verfahrens, bei dem die Stromdichte während des gesamten Abtragprozesses über einer kritischen Stromdichte liegt oder gegen Ende des Abtragprozesses über eine kritische Stromdichte erhöht wird, bei der ein flächenhafter Abtrag erfolgt, lassen sich extrem glatte Innenflächen der Ausnehmung erzeugen. Bei einer derartigen Wahl der Stromdichte wird die Oberflächengüte durch so genanntes Elektropolieren verbessert. Dieser Schritt des Elektropolierens lässt sich durch einfache Erhöhung der Stromdichte in den Herstellungsschritt zur Herstellung der dreidimensionalen Form integrieren, so dass sich hochpräzise Teile abformen lassen und sich damit die Entformungsqualität verbessert. Da es sich dabei um einen rein elektrochemisch wirkenden Vorgang handelt, können auch sehr empfindliche Strukturen mit hoher Oberflächengüte hergestellt werden. Weiterhin arbeitet das Polieren im Gegensatz zum Schleifen auf beliebig geformten Oberflächen. Die Oberflächenqualität kann dabei R_{z}-Werte im Bereich von Nanometern erreichen.

Die Durchgangsöffnungen in der Maskierungsschicht haben beim vorliegenden Verfahren vorzugsweise Durchmesser, die ≤ 10 µm sind. Dies betrifft vorzugsweise alle Durchgangsöffnungen in der Maskierungsschicht. In einer Ausgestaltung des vorliegenden Verfahrens können jedoch auch einzelne größere Durchgangsöffnungen eingesetzt werden, an die sich dann die kleineren Durchgangsöffnungen anschließen. Dies hängt insbesondere vom gewünschten Tiefenprofil der Ausnehmung ab. Besonders gute Ergebnisse lassen sich mit Durchgangsöffnungen erzielen, die Durchmesser von 1 µm oder darunter aufweisen. Durch Wahl derart kleiner Durchgangsöffnungen lassen sich sehr präzise dreidimensionale Formen herstellen. Die Abstände der Durchgangsöffnungen werden dabei lokal entsprechend der gewünschten Stromdichte gewählt und können beispielsweise im Bereich zwischen 10 und 100 µm liegen. Auf diese Weise wird die Stromdichte durch eine lokale Variation der Dichte der Durchgangsöffnungen in der Maskierungsschicht beeinflusst. Unter der Dichte der Durchgangsöffnungen ist die durch die Durchgangsöffnungen gebildete Öffnungsfläche pro Flächeneinheit zu verstehen.

Die Maskierungsschicht wird vorzugsweise durch einen Schichtabscheideprozess, wie er beispielsweise aus der Halbleitertechnologie bekannt ist, auf die Oberfläche des Werkstücks aufgebracht. Beispiele für derartige Abscheideprozesse sind LPCVD(Low Pressure Chemical Vapour Deposition), thermische Abscheidung oder Sputtern. Die Öffnungen in der Maskierungsschicht werden dann durch bekannte fotolithografische Verfahren durch Belichtung und Entwicklung einer auf die Maskierungsschicht aufgebrachten Fotomaske und anschließende Ätzung der Maskierungsschicht erzeugt. Die Maskierungsschicht kann dabei einer Standardbeschichtung entsprechen, die in einer üblichen Silizium-Technologie aufgebracht wird.

In einer Ausführungsform des vorliegenden Verfahrens wird der elektrochemische Materialabtrag in gleicher Weise wie bei dem bekannten Anodisieren von Silizium durchgeführt. Dies erfordert eine elektrische Spannung zwischen der Rückseite des Werkstücks und dem vorderseitigen Elektrolyten, die zu Stromdichten unterhalb der so genannten kritischen Stromdichte führt. Je nach eingesetztem Material des Werkstücks und des flüssigen Elektrolyten kann es hierbei erforderlich sein, nach Durchführung des elektrochemischen Prozesses eventuell in der Ausnehmung verbleibende poröse Materialstrukturen aus dieser Ausnehmung zu entfernen. Dies kann auch mit einer geeigneten Ätzlösung erfolgen, da die Selektivität des porösen Materials gegenüber dem Grundmaterial des Werkstücks sehr hoch ist.

In einer bevorzugten Ausführungsform wird zusätzlich in einem zweiten Teil des elektrochemischen Abtragungsprozesses die Stromdichte durch Erhöhung der Spannung über die kritische Stromdichte erhöht, so dass der Effekt des Elektropolierens eintritt. Dadurch wird die Oberfläche der Form, d.h. die Grenzfläche zum nicht veränderten Grundmaterial, extrem glatt, da ab dieser kritischen Stromdichte kein poröses Material mehr entsteht, sondern die Oberfläche polierend und ganzflächig abgetragen wird. Die Stromdichte sollte hierbei sehr viel höher gewählt werden, als die Stromdichte beim vorangehenden Verfahrensabschnitt. So können beispielsweise im ersten Verfahrensabschnitt Stromdichten im Bereich von 10 bis 50 mA/cm² gewählt werden, während im zweiten Verfahrensabschnitt die Stromdichte bis auf Werte von 100 bis 200 mA/cm² erhöht wird. Die einmal gebildete poröse Schicht bleibt dabei während des Elektropolierens unverändert. Da der Übergang vom ersten zum zweiten Verfahrensabschnitt rein durch Änderung der Stromdichte erreicht werden kann, ist dieser Prozess sehr einfach in rechnergestützte Fertigungsabläufe integrierbar.

In einer weiteren Ausgestaltung des vorliegenden Verfahrens wird die Stromdichte über den gesamten Materialabtragungsprozess oberhalb der kritischen Stromdichte gewählt, so dass der Materialabtrag ausschließlich durch Elektropolieren erfolgt. Dies hat den Vorteil, dass sich kein poröses Material in der Ausnehmung bildet, so dass der eventuell erforderliche Schritt des Entfernens der porösen Struktur am Ende des Herstellungsprozesses entfallen kann.

Die rückseitige Oberfläche des Werkstücks, die der Oberfläche der Maskierungsschicht gegenüber liegt, wird mit einer elektrisch leitfähigen Beschichtung versehen oder geeignet elektrisch leitfähig dotiert. Auf diese Weise kann die Erzeugung einer ausreichenden Strom - dichte im Werkstück gewährleistet werden. In einer weiteren Ausgestaltung des Verfahrens kann diese rückseitige Schicht derart strukturiert werden, um einerseits den durch die Verteilung der Durchgangsöffnungen in der Maskierungsschicht hervorgerufenen Strombündelungseffekt im Werkstück weiter zu verstärken. Andererseits können durch diese Strukturierung mit einer oder mehreren Öffnungen auf der Rückseite unerwünschte Kanteneffekte, durch die die Form an den Rändern der Öffnungen in der Maskierungsschicht eine größere Tiefe aufweist, reduziert bzw. vermieden werden. Die zur Vermeidung des Kanteneffekts erforderliche Größe der Öffnung in der elektrisch leitfähigen Schicht auf der Rückseite des Werkstücks, in der Regel eines Wafers, hängt von der Dicke des Werkstücks und seiner Leitfähigkeit ab. So muss die rückseitige Öffnung bspw. bei einer Werkstückdicke von 400 µm, einem spezifischen Widerstand von 3 Ωcm und einer Breite der gewünschten Ausnehmung von z.B. 2 mm kleiner als 200 µm sein. Bei einer Werkstückdicke von 20 µm, einem spezifischen Widerstand von 3 Ωcm und einer Breite der Ausnehmung von z.B. 200 µm muss die rückseitige Öffnung kleiner als 20 µm sein.

Eine andere Möglichkeit zur Reduzierung des Kanteneffekts besteht in der Verringerung der Leitfähigkeit des Werkstücks. So kann bspw. bei einer Vergrößerung des spezifischen Widerstandes von 3 Ωcm auf 1000 Ωcm der Kanteneffekt bei gegebener Waferdicke ebenfalls reduziert werden. Die Leitfähigkeit des Werkstücks ergibt sich aus der wählbaren Grunddotierung des das Werkstück bildenenden Siliziums (3 Ωcm entspricht einer Dotierung von 5·10¹⁵ cm⁻³). Die Dicke des Werkstücks (Waferdicke) ist heutzutage kundenspezifisch im genannten Bereich erhältlich.

Das vorliegende Verfahren eignet sich insbesondere für die Herstellung von Formen, beispielsweise für die Kunststoff-Abformtechnik. Durch die Möglichkeit der Integration des Schrittes des Elektropolierens in den Prozess der eigentlichen Formgebung lässt sich die Obeflächengüte der entstehenden Form zusätzlich deutlich erhöhen. Das Verfahren eignet sich hierbei insbesondere für die Herstellung von Mikroformen, d.h. von Formen mit Strukturtiefen im Bereich von < 1 mm. Selbstverständlich lässt sich das Verfahren jedoch auch für die Erzeugung anderer Strukturtiefen sowie für andere Anwendungen einsetzen, bei denen frei geformte Ausnehmungen in einem Werkstück erzeugt werden sollen.

### Kurze Beschreibung der Zeichnungen

Das vorliegende Verfahren wird nachfolgend anhand eines Ausführungsbeispiels in Verbindung mit den Zeichnungen ohne Beschränkung des allgemeinen Erfindungsgedankens nochmals kurz erläutert. Hierbei zeigen:
- Fig. 1: schematisch verschiedene Verfahrensschritte zur Aufbringung und Strukturierung der Maskierungsschicht;
- Fig. 2: den Prozess des elektrochemischen Abtrags beim vorliegenden Verfahren; und
- Fig. 3: stark schematisiert ein Beispiel für die Verteilung der Durchgangsöffnungen in der Maskierungsschicht in Draufsicht.

### Wege zur Ausführung der Erfindung

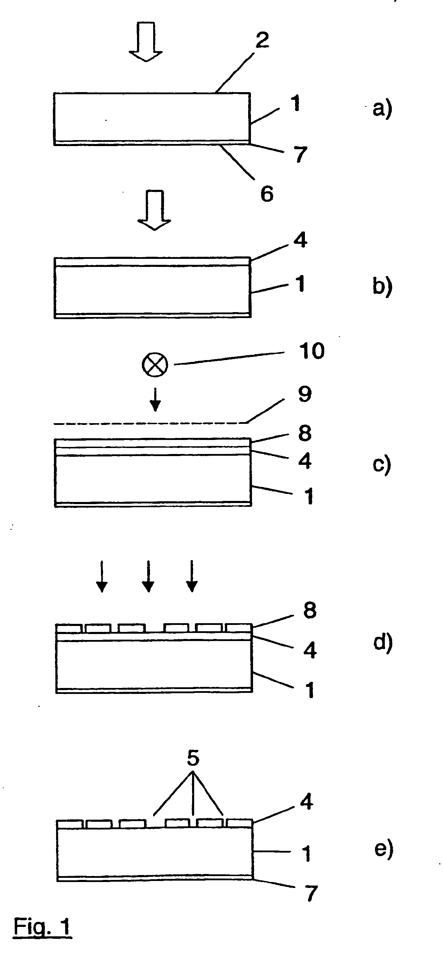

Im vorliegenden Beispiel ist das Werkstück 1 für die Erzeugung einer dreidimensionalen Form bzw. Ausnehmung ein einkristallines Siliziumsubstrat aus p-Silizium. Für den elektrochemischen Materialabtrag wird die Technik des Anodisierens von Silizium in einer Anodisierungslösung aus HF/Ethanol eingesetzt. Für diesen Prozess ist eine Maskierungsschicht aus einem geeigneten Material erforderlich, das chemisch resistent in dieser Anodisierungslösung ist. Die Maskierungsschicht wird daher im vorliegenden Beispiel aus Si₃N₄ gewählt. Diese Maskierungsschicht 4 wird in einem ersten Schritt mittels LPCVD auf die Oberfläche 2 des Werkstücks 1 aufgebracht, das auf der Rückseite 6 mit einer p⁺-dotierten, elektrisch leitfähigen Schicht 7 versehen ist (Fig. 1a/b). In einem nächsten Schritt wird diese Maskierungsschicht 4 in geeigneter Weise strukturiert. Dies erfolgt durch Aufbringen einer fotoempfindlichen Schicht 8, die über eine Lichtquelle 10 und eine geeignete Fotomaske 9 belichtet und entwickelt wird (Fig. 1c). Die auf diese Weise entstandene strukturierte Schicht 8 dient anschließend als Ätzmaske für eine Ätzung der Maskierungsschicht 4, so dass schließlich das Werkstück 1 mit der strukturierten Maskierungsschicht 4 für den nachfolgenden elektrochemischen Prozess zur Verfügung steht (Fig. 1d und e).

Die Maskierungsschicht 4 wird bei dem vorangehenden Prozess mit einer Vielzahl von Durchgangsöffnungen 5 strukturiert, die durch entsprechende Wahl der Anzahl, Größe und lokalen Dichte eine Einstellung des gewünschten Tiefenprofils der Form ermöglichen. Für eine Formgebung von einigen 100 µm Tiefe ist hierbei eine Dicke der Maskierungsschicht 4 von einigen 100 nm ausreichend. Die erforderliche Dicke ist jeweils durch die Selektivität des entsprechenden Materialabtragprozesses bestimmt.

Im vorliegenden Beispiel ist die Verteilung und Größe der Öffnungen 5 nur schematisch angedeutet, wobei aus der Figur ersichtlich ist, dass die Größe bzw. der Durchmesser der Durchgangsöffnungen 5 zum Rand des Werkstücks 4 hin abnimmt. Bevorzugt sind derartige Durchgangsöffnungen 5 nur einige µm groß, wobei jedoch auch kleinere Durchgangsöffnungen für eine genaue Einstellung des Tiefenprofils erforderlich sein können.

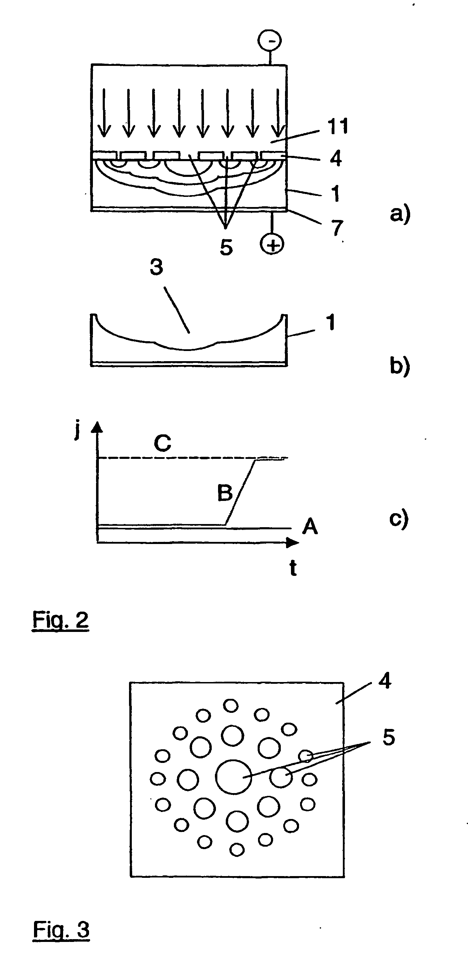

Das auf diese Weise mit der Maskierungsschicht 4 bereitgestellte Werkstück wird anschließend einem Anodisierungsprozess unterzogen, wie dies in Fig. 2 angedeutet ist. Hierzu wird die Oberfläche 2 des Werkstücks 1 mit der Anodisierungslösung 11 in Kontakt gebracht. Zwischen der Anodisierungslösung 11 und der elektrisch leitfähigen Schicht 7 an der Rückseite 6 des Werkstücks 1 wird eine Spannung angelegt, wobei die Rückseite 6 die Anode bildet. Bei dieser Anodisierung fließt ein Strom durch das umzuwandelnde Material des Werkstücks 1, wie dies mit den Pfeilen in der Fig. 2a angedeutet ist. Durch die Maskierungsschicht 4 mit den darin angeordneten Durchgangsöffnungen 5 ist die Stromdichte jedoch nicht an jeder Stelle des Werkstückes gleich. So bilden sich in Bereichen des Werkstückes 1 mit einer höheren (Öffnungs-)Dichte der Durchgangsöffnungen 5 andere Stromdichten aus, als in Bereichen mit einer kleineren Dichte der Durchgangsöffnungen. Bei diesem Anodisierungsprozess gelangen Ladungsträger, insbesondere Löcher bei einem wie hier p-dotierten Material, an die Grenzfläche zum Elektrolyten, hier HF/Ethanol/Wasser, wodurch das Silizium zum Teil angeätzt wird. Durch dieses Anätzen entsteht die bekannte charakteristische feinporöse Struktur des Siliziums in diesem Bereich. Durch die in Verbindung mit der rückseitigen elektrisch leitfähigen Schicht 7 und der Verteilung der Durchgangsöffnungen 5 hervorgerufene Strombündelung im Werkstück 1 in Abhängigkeit von der Dichte, bzw. der Größe und dem Abstand, der Durchgangsöffnungen 5, erfolgt dieser Ätzprozess an unterschiedlichen Stellen mit unterschiedlicher Ätzrate. Dadurch entsteht nach einer bestimmten Zeit eine lokal unterschiedliche Anodisierungstiefe, die jeweils von der lokalen Stromdichte abhängt. Die lokal unterschiedliche Stromdichte führt somit zu einem entsprechenden Tiefenprofil der Ausnehmung 3, wie dies in den Fig. 2a und b schematisch angedeutet ist. Die Fig. 2a zeigt hierbei den Fortschritt des Materialabtrags bzw. der Anodisierung des Siliziums mit der Zeit. Dies ist durch die im Werkstück 1 angedeuteten Linien zu erkennen.

Nach der Umwandlung des Grundmaterials, hier p-Silizium, in poröses Silizium, kann das gebildete poröse Material sehr einfach und mit einer hohen Selektivität gegen das Grundmaterial entfernt werden. Dazu kann beispielsweise schwache Kalilauge (etwa 1%-ig) verwendet werden. Eine andere Möglichkeit der Entfernung dieses porösen Siliziums besteht darin, das poröse Silizium zunächst thermisch in SiO₂ umzuwandeln und anschließend das poröse SiO₂ zu entfernen, beispielsweise in HF. Als Resultat ergibt sich die in Fig. 2b gezeigte dreidimensionale Struktur. Wie aus dieser Figur ersichtlich ist, kann mit der vorliegenden Technik ein nahezu beliebig geformtes Tiefenprofil erreicht werden, das von der jeweiligen Verteilung der Durchgangsöffnungen 5 in der Maskierungsschicht 4 abhängt. Durch diese Verteilung kann somit das Tiefenprofil exakt gesteuert werden.

Die für die Anodisierung angelegte Spannung in der Größe von beispielsweise 10 Volt kann während des gesamten Prozesses konstant gehalten werden (Kurve A der Fig. 2c), wobei z. B. Stromdichten im Bereich von 10 - 20 mA/cm² erreicht werden. Weiterhin ist es auch möglich, die Stromdichte beim elektrochemischen Materialabtrag über eine geeignete Variation der angelegten Spannung zusätzlich zu beeinflussen, insbesondere gleitend zu steuern, um die durch die Gestaltung der Maskierungsschicht hervorgerufenen lokalen Unterschiede der Stromdichte aufgrund des nichtlinearen Verhaltens des Stromdichteeffektes noch zu verstärken.

In einer Variante des Verfahrens wird gegen Ende des Abtragungsprozesses die Stromdichte um etwa den Faktor 10 durch Erhöhung der angelegten Spannung angehoben, wie dies anhand der Kurve B in der Fig. 2c angedeutet ist. Die Stromdichte erhöht sich hierbei auf Werte um 200 mA/cm², so dass die Oberfläche der entstehenden Ausnehmung in diesem Verfahrensstadium zusätzlich elektropoliert wird.

Fig. 2c zeigt auch eine andere Ausgestaltung des Verfahrens, bei dem diese hohe Stromdichte über den gesamten Abtragungsprozess gewählt wird (Kurve C), so dass kein poröses Silizium entsteht, sondern der gesamte Materialabtrag durch Elektropolieren erfolgt.

Schließlich ist in Fig. 3 nochmals beispielhaft und zur Veranschaulichung sehr stark schematisiert eine Draufsicht auf eine Maskierungsschicht 4 zu erkennen, bei der die Dichte der Durchgangsöffnungen 5, d.h. die Öffnungsfläche pro Flächeneinheit, in der Maskierungsschicht 4 vom Zentrum nach außen abnimmt, so dass sich eine Geometrie der Ausnehmung entsprechend der Fig. 2b ergibt. Selbstverständlich lassen sich durch geeignete Wahl der Größen und Verteilung der Durchgangsöffnungen 5 in der Maskierungsschicht 4 auch beliebig unsymmetrische Tiefenprofile erzeugen.

Das vorliegende Verfahren eignet sich insbesondere zur direkten dreidimensionalen Formgebung von Materialien, die elektrochemisch geätzt werden können, wie beispielsweise Silizium oder Aluminium. Der Vorteil des Verfahrens besteht u.a. in der möglichen Einstellung des Anisotropiewertes A_{f} über die Verteilung der Durchgangsöffnungen in der Maskierungsschicht. Eine weitere und wichtigere Anwendung betrifft jedoch die Herstellung von Formen, die in einem weiteren Schritt mit bekannten Verfahren der Kunststofftechnik, wie beispielsweise Spritzgießen oder Heissprägen, zur Herstellung von beliebig geformtem Produkten eingesetzt werden.

### BEZUGSZEICHENLISTE

| | |
|---|---|
| 1 | Werkstück |
| 2 | Oberfläche des Werkstücks |
| 3 | Ausnehmung |
| 4 | Maskierungsschicht |
| 5 | Durchgangsöffnungen |
| 6 | Rückseite des Werkstücks |
| 7 | Elektrisch leitfähige Schicht |
| 8 | Fotoempfindliche Schicht |
| 9 | Fotomaske |
| 10 | Belichtung |
| 11 | Flüssiger Elektrolyt |

## Patentansprüche

1. Verfahren zur Bildung einer Ausnehmung mit einem frei vorgebbaren Tiefenprofil in der Oberfläche eines Werkstücks (1), insbesondere zur Herstellung von Mikroformen, bei dem die Ausnehmung (3) durch elektrochemischen Materialabtrag unter Einsatz einer strukturierten Maskierungsschicht (4) erzeugt wird, die auf die Oberfläche (2) aufgebracht wird, wobei auf einer der Oberfläche (2) mit der Maskierungsschicht (4) gegenüber liegenden rückseitigen Oberfläche (6) des Werkstücks (1) eine elektrisch leitfähige Schicht (7) aufgebracht oder in der rückseitigen Oberfläche (6) erzeugt wird, die die Anode beim elektrochemischen Materialabtrag in der Oberfläche (2) des Werkstücks (1) bildet,
wobei eine Stromdichte beim elektrochemischen Materialabtrag durch Erzeugen einer geeigneten Verteilung mehrerer Durchgangsöffnungen (5) in der Maskierungsschicht (4) innerhalb eines Bereiches, der beim elektrochemischen Materialabtrag über der zu bildenden Ausnehmung (3) liegt, derart lokal beeinflusst wird, dass das frei vorgebbare Tiefenprofil der Ausnehmung (3) entsteht, und
wobei die elektrisch leitfähige Schicht (7) flächig strukturiert wird, um das Tiefenprofil der Ausnehmung (3) zusätzlich zu beeinflussen.

2. Verfahren nach Anspruch 1,
**dadurch gekennzeichnet,**
**dass** die elektrisch leitfähige Schicht (7) derart flächig strukturiert wird, dass sie die durch die Maskierungsschicht (4) hervorgerufene lokale Beeinflussung der Stromdichte verstärkt und eine Ausbildung unerwünschter Vertiefungen an Rändern oder innerhalb der Ausnehmung (3) verhindert.

3. Verfahren nach Anspruch 1 oder 2,
**dadurch gekennzeichnet,**
**dass** Dicke und elektrische Leitfähigkeit des Werkstücks (1) so gewählt werden, dass die durch die Maskierungsschicht (4) hervorgerufene lokale Beeinflussung der Stromdichte verstärkt wird und eine ungewollte Erhöhung der Stromdichte an vorderseitigen Kanten der Ausnehmung (3) oder der Durchgangsöffnungen (5) vermieden wird.

4. Verfahren nach einem der Ansprüche 1 bis 3,
**dadurch gekennzeichnet,**
**dass** alle oder zumindest ein Teil der Durchgangsöffnungen (5) mit einem Durchmesser von s 10 µm in der Maskierungsschicht (4) erzeugt werden.

5. Verfahren nach einem der Ansprüche 1 bis 4,
**dadurch gekennzeichnet,**
**dass** die Stromdichte durch Variation einer lokalen Dichte der Durchgangsöffnungen (5) in der Maskierungsschicht (4) beeinflusst wird.

6. Verfahren nach einem der Ansprüche 1 bis 5,
**dadurch gekennzeichnet,**
**dass** die Stromdichte beim elektrochemischen Materialabtrag in einem ersten Verfahrensabschnitt unterhalb und in einem sich anschließenden zweiten Verfahrensabschnitt oberhalb einer kritischen Stromdichte eingestellt wird, so dass im zweiten Verfahrensschritt eine Glättung einer Innenfläche der Ausnehmung (3) durch Elektropolieren erfolgt.

7. Verfahren nach einem der Ansprüche 1 bis 5,
**dadurch gekennzeichnet,**
**dass** die Stromdichte beim elektrochemischen Materialabtrag oberhalb einer kritischen Stromdichte eingestellt wird, so dass der Materialabtrag durch Elektropolieren erfolgt.

8. Verfahren nach einem der Ansprüche 1 bis 7,
**dadurch gekennzeichnet,**
**dass** die Stromdichte beim elektrochemischen Materialabtrag über eine Variation einer beim elektrochemischen Materialabtrag angelegten elektrischen Spannung zusätzlich beeinflusst wird.

9. Verfahren nach einem der Ansprüche 1 bis 8 zur Herstellung von Formen für die Kunststoff-Abformtechnik.

## Claims

1. Method of forming a recess having an optionally predeterminable profile in depth in the surface of a work piece (1), in particular for the manufacture of micro moulds, wherein the recess (3) is created by the electrochemical removal of material, using a structured masking layer (4), which is applied on said surface (2), with an electrically conductive layer (7) being applied on a rear surface (6) of said work piece (1), which is opposite to said surface (2) with said masking layer (4), or being formed in said rear surface (6), which layer constitutes the anode in the process of electrochemical removal of material in the surface (2) of said work piece (1),
wherein, in electro-chemical removal of material, a current density is locally influenced by the formation of an appropriate distribution of several through-holes (5) in said masking layer (4) within a zone located above said recess (3) to be formed in the course of electro-chemical removal of material, in such a way that said optionally predeterminable profile in depth of said recess (3) will be formed, and wherein said electrically conductive layer (7) is structured in a planar configuration for taking additional influence on said profile in depth of said recess (3).

2. Method according to Claim 1,
**characterised in that**
said electrically conductive layer (7) is structured in a planar configuration in a way that it amplifies the local influence created by said masking layer (4) on the current density, with prevention of a formation of undesirable depressions on the edges or inside said recess (3).

3. Method according to Claim 1 or 2,
**characterised in that**
the thickness and the electrical conductivity of the work piece (1) are chosen in such a way that the local influence created by said masking layer (4) on the current density will be amplified, while preventing an undesirable amplification on the edges on the forward side of said recess (3) or said through through-holes (5).

4. Method according to Claim 3,
**characterised in that**
all the through-holes (5) or at least one part of the through-holes are formed with a diameter of ≤ 10 µm in said masking layer (4).

5. Method according to any of the Claims 1 to 4,
**characterised in that**
the current density is influenced by a variation of a local density of said through-holes (5) in said masking layer (4).

6. Method according to any of the Claims 1 to 5,
**characterised in that**
in the course of the electro-chemical material removal, the current density is adjusted to a level lower than a critical value of the current density, in a first step of operation, and to a level higher than a critical density in a following second step of operation, in such a way that there is a smoothening of an interior surface of said recess (3) by electro-polishing in said third step of operation.

7. Method according to any of the Claims 1 to 5,
**characterised in that**
in the course of the electro-chemical material removal, the current density is adjusted to a level higher than a critical current density in such a way that the material removal takes place by electro-polishing.

8. Method according to any of the Claims 1 to 7,
**characterised in that**
in the course of the electro-chemical material removal, the current density is influenced additionally by way of an electrical voltage applied in the course of the electro-chemical material removal.

9. Method according to any of the Claims 1 to 8 for the manufacture of moulds for the technique of moulding synthetic materials.

## Revendications

1. Procédé à former un creux à un profil en profondeur prédéterminable à volonté dans la surface d'une pièce à usiner (1), en particulier pour la fabrication des micro moules, dans lequel ledit creux (3) est formé par enlèvement électrochimique de matériau, en employant une couche de masquage structurée 84), qui est appliquée sur la surface (2), à une couche à conduction électrique (7) étant appliquée sur une surface (6) arrière de ladite pièce à usiner, qui est opposée à ladite surface (2) à ladite couche de masquage (4), ou étant formée dans ladite surface (6) arrière, qui constitue l'anode au cours de l'enlèvement électrochimique de matériau dans la surface (2) de ladite pièce à usiner,
dans lequel, au cours de l'enlèvement électrochimique de matériau, une densité de courant est influencée localement par la formation d'une distribution appropriée de plusieurs trous de passage (5) dans ladite couche de masquage (4) au-dedans d'une zone, qui se trouve au-dessus du creux (3) à former, d'une telle manière, que ledit profil en profondeur prédéterminable à volonté soit formé, et dans lequel ladite couche (7) à conduction électrique subit une structuration planaire pour prendre de l'influence additionnelle sur le profil en profondeur dudit creux (3).

2. Procédé selon la revendication 1,
**caractérisé en ce**
**que** ladite couche à conduction électrique (7) est structurée à deux dimensions d'une telle manière, qu'elle amplifie l'influence locale créée par ladite couche de masquage (4) sur la densité de courant, en empêchant une formation des évidements non souhaités aux bords ou à l'intérieur dudit creux (3).

3. Procédé selon la revendication 1 ou 2,
**caractérisé en ce**
**que** l'épaisseur et la conductivité électrique de la pièce à usiner (1) sont choisis d'une manière à amplifier l'influence locale créée par ladite couche de masquage (4) sur la densité de courant, en évitant une amplification non souhaitée de la densité de courant aux bords du côté avant dudit creux (3) ou desdits trous de passage (5).

4. Procédé selon la revendication 3,
**caractérisé en ce**
**que** tous les trous de passage (5) ou au moins une partie des trous de passage sont formés à un diamètre de ≤ 10 µm dans ladite couche de masquage (4).

5. Procédé selon une quelconque des revendications 1 à 4,
**caractérisé en ce**
**que** la densité de courant est influencée par une variation d'une densité locale desdits trous de passage (5) dans ladite couche de masquage (4).

6. Procédé selon une quelconque des revendications 1 à 5,
**caractérisé en ce**
**qu'**au cours de l'enlèvement électrochimique de matériau, la densité de courant est ajusté à un niveau inférieur à une valeur critique de la densité de courant, dans une première étape d'opération, et à un niveau supérieur à une densité de courant critique dans une deuxième étape d'opération suivante, d'une telle manière, qu'il y ait un lissage d'une surface intérieure dudit creux (3) par polissage électrique dans ladite troisième étape d'opération.

7. Procédé selon une quelconque des revendications 1 à 5,
**caractérisé en ce**
**qu'**au cours de l'enlèvement électrochimique de matériau, la densité de courant est ajustée à un niveau supérieur à une densité critique de courant, d'une telle manière, que l'enlèvement de matériau se fasse par polissage électrique.

8. Procédé selon une quelconque des revendications 1 à 7,
**caractérisé en ce**
**qu'**au cours de l'enlèvement électrochimique de matériau, la densité de courant est influencée au plus par voie d'une variation de la tension électrique appliquée au cours de l'enlèvement électrochimique de matériau.

9. Procédé selon une quelconque des revendications 1 à 8 pour la fabrication de moules pour la technologie de moulage de matériaux synthétiques.
